# EUROPEAN PATENT SPECIFICATION

(11) **EP 2 727 296 B1**
(45) Date of publication and mention of the grant of the patent: **08.04.2015**
(21) Application number: 12737733.1
(22) Date of filing: 02.07.2012
(51) Int. Cl.: H04L 12/70

(54) **ROUTING METHOD AND ROUTING DEVICE FOR A PACKET-ORIENTED COMMUNICATION NETWORK**
ROUTINGVERFAHREN UND ROUTINGVORRICHTUNG FÜR EIN PAKETORIENTIERTES KOMMUNIKATIONSNETZWERK
PROCÉDÉ DÝACHEMINEMENT ET DISPOSITIF DÝACHEMINEMENT POUR RÉSEAU DE COMMUNICATION ORIENTÉ PAQUETS

(30) Priority: 30.06.2011 EP 11172184
(43) Date of publication of application: 07.05.2014
(73) Proprietor: ABB Research Ltd., 8050 Zürich (CH)
(72) Inventor: DZUNG, Dacfey, CH-5430 Wettingen (CH)
(74) Representative: ABB Patent Attorneys
(86) International application number: PCT/EP2012/062813
(87) International publication number: WO 2013/001090

(56) References cited:
- US-A1- 2010 128 703
- US-B1- 6 226 266
- ULUDAG S ET AL: "A Laplace Transform-Based Method to Stochastic Path Finding", COMMUNICATIONS, 2009. ICC '09. IEEE INTERNATIONAL CONFERENCE ON, IEEE, PISCATAWAY, NJ, USA, 14 June 2009 (2009-06-14), pages 1-5, XP031505593, ISBN: 978-1-4244-3435-0

## Description

### Field of the Invention

The present invention relates to a routing method and a routing device for a packet-oriented communication network. Specifically, the present invention relates to a routing method and a routing device for selecting in a packet-oriented communication network a preferred path from different possible paths from a source node to a destination node.

### Background of the Invention

In packet-oriented communication networks, a data packet is routed from a source to a destination along a certain path consisting of a number of hops (links between neighboring routers). The paths are set up and maintained by a routing protocol based on link metrics. In traditional Internet routing protocols such as RIP (RFC2453), the length of paths are measured with "hop count" as the link metric. The routing algorithms determine the shortest paths between source and destination node pairs with respect to the number of hops (routing nodes) traversed. The link metric is, thus, only binary (1 for active links, infinite for non-existing or broken links). This metric is easy to measure and simple to process, and is sufficient for typical static wired broadband links. However, lossy links, such as wireless or power line links, typically exhibit dynamically varying behavior, which should be measured by a finer grained link quality metric, in order to optimize the routing. In addition to transmission reliability (packet loss rate), the transmission delay is often the main criterion for routing decisions. Transmission delays are caused by several mechanisms, such as random bit errors and ensuing packet re-transmissions, random back-off in contention based medium access schemes, queuing delays in routers, etc.

Forthcoming Routing Protocols for Low power and Lossy networks (RPL) provide the capability to select one out of a number of predefined link metrics to be used in a given mesh network.

As outlined in M. Campista et al., "Routing Metrics and Protocols for Wireless Mesh Networks", IEEE Network, January/February 2008, pp.6-12, many link quality aware metrics have been proposed particularly for wireless mesh networks:
- Given a measured packet delivery ratio *Di* on a link *i*, the Expected Transmission Count ETX using that link is *ETXᵢ* = *1*/*Di,* or *ETXᵢ* = *1*/*(D_{fi}·Dᵣᵢ),* if data forward *D_{fi}* and return acknowledgment delivery ratios *Dᵣᵢ* are included. *ETX* is an additive metric, and the path with the lowest sum of link *ETXᵢ* is selected. The Expected Transmission Time metric (ETT) adjusts *ETX* to account for the size of data packet and the data rate *Rᵢ* of the link, *ETTᵢ = ETXᵢ x packetsize l Rᵢ.*
- The Minimum Loss ML measures the end-to-end packet delivery ratio, hence the path delivery ratio is the product *Dₚₐₜₕ* of all *Dᵢ* along the path.
- If the bottleneck link along a path is critical, then a relevant path metric is the minimum of the data rates *R*ᵢ of the links along the path.
- Further proposed modifications of link metrics include, in addition to the mean, also the standard deviation e.g. of the packet error rate, in order to model the variability of the link quality (modified mETX, Effective Number of Transmissions, SNR- and interference aware metrics).
- Load aware metrics include effects of interflow interference on each link: the data rate *Rᵢ* may be the residual data rate on the link, excluding other traffic shared on the link. A further measure of dynamic load is given by the instantaneous buffer queue length in the node.

As described by M. Campista et al., link metrics are used both as route optimization criterion, and as routing constraint. Link metrics can be recorded (acquired and stored separately for each link along the path) or aggregated (accumulated into one number along the path). Metric aggregation is additive, multiplicative, maximum or minimum.

The paper "A Laplace transform-based method of stochastic path finding, Suleymann Uludag et al." describes a method of transforming the probability distributions into the Laplace domain, find the Laplace Transform of their convolutions and numerically inverse to find the distribution function in the time domain. Picard's iterative method of successive approximations is used to find the solution. Simulations show that the proposed stochastic approach selects correct paths more frequently, incurs less Overhead with respect to the dissemination and processing of state information, and reduces the churn by selecting more stable paths.

### Summary of the Invention

It is an object of this invention to provide a routing method and a routing device for a packet-oriented communication network, which method and device do not have at least some of the disadvantages of the prior art. In particular, it is an object of the present invention to provide a routing method and a routing device suitable for delay-sensitive data transmission in a packet-oriented communication network.

According to the present invention, these objects are achieved through the features of the independent claims. In addition, further advantageous embodiments follow from the dependent claims and the description.

According to the present invention, the above-mentioned objects are particularly achieved in that for routing a data packet in a packet-oriented communication network, determined is a transmission delay probability distribution for any link between adjacent nodes of a path from a source node to a destination node. The transmission delay probability distribution of a link is defined by a probability density function for the link. For the different possible paths, determined is in each case a total transmission delay probability distribution through convolution of the probability density functions of the links between the adjacent nodes of the respective path. Subsequently, a preferred path is selected based on the total transmission delay probability distributions determined for the different possible paths and based on a selection or optimality criterion. Based on the aforementioned total transmission delay probability distributions as single and exhaustive link metric information, differentiated routing for classes of packets of the same source / destination pair in the same network is performed. The selection or optimality criterion may follow a Quality-of-Service (QoS) requirement of the packet class.

In an embodiment, selecting the preferred path includes determining from the total transmission delay probability distributions for the different possible paths in each case a quantile *d*_{α}, such that the probability of the total transmission delay of a path being smaller or equal to the quantile *d*_{α} is equal to a given probability level *α,* Pr[*delay* ≤ *d_{α}*] *=*α*,* and selecting the preferred path with the lowest quantile *d*_{α}.

In a further embodiment, selecting the preferred path includes determining from the total transmission delay probability distributions for the different possible paths in each case a probability of not exceeding a given maximum transmission delay, and selecting the preferred path with the highest probability of not exceeding the maximum transmission delay.

In another embodiment, selecting the preferred path includes determining from the total transmission delay probability distributions for the different possible paths in each case a packet delivery ratio, and selecting the preferred path with the highest packet delivery ratio.

In yet another embodiment, the classes of packets pertain to communication in the field of medium and/or low voltage power distribution commonly referred to as Smart Grid communications. Specifically, the data include status or cyclic sampled data requiring a low quantile *d*_{α}, as well as metering data tolerating high *d_{α},* but requiring low packet loss probability *pₚₐₜₕ*.

In addition to the routing method and the routing device for a packet-oriented communication network, the present invention also relates to a computer program product comprising computer program code for controlling one or more processors of the routing device to perform the routing method, preferably a computer program product comprising a computer-readable medium having the computer program code stored therein.

Thus, a new class of link metrics is introduced which is defined as the complete probability distribution of the transmission delay over the link. The probability distribution of the delay of a link *i* is described by its probability density function *pdfᵢ* and the packet loss probability *pᵢ*. Formally, the packet loss probability *pᵢ* is the probability that transmission delay is infinite, so *pᵢ* could be subsumed into *pdfᵢ.* In practice it is more convenient to keep *pᵢ* separate, which implies in turn that the integral of *pdfᵢ* over finite delays must equal *1-pᵢ.* The new link metric has the following advantages:
- Transmission delay is represented in full generality, including its statistical variation and the probability of packet loss. This link metric information is acquired and maintained in the routing system.
- The actual routing decision can then separately be made based on this link metric information, e.g. using mean delay (ETT), mean and variance delay (mETX), or packet loss rate of the path (*pₚₐₜₕ*).
- A new routing criterion relevant for many applications can be used with this link metric information, namely the quantile *d*_{α} of the total delay in the path, i.e. *d*_{α} such that *Pr[delay* ≤ *d*_{α}*]* = α*,* where α is a large number close to 1, e.g. α=*90%*. Such a criterion is particularly relevant for delay-sensitive applications.

### Brief Description of the Drawings

The present invention will be explained in more detail, by way of example, with reference to the drawings in which:
- Figure 1:: shows a block diagram illustrating schematically a packet-oriented communication network comprising a plurality of nodes interconnected by links (hops).
- Figure 2:: shows a block diagram illustrating schematically a routing device for a packet-oriented communication network.
- Figure 3:: shows three graphs which illustrate in each case for a path the transmission delay probability distributions of its individual links.
- Figure 4:: shows graphs which illustrate for the three different paths their total transmission delay probability distributions.
- Figure 5:: shows a flow diagram illustrating an exemplary sequence of steps of a routing method for a packet-oriented communication network.

### Detailed Description of the Preferred Embodiments

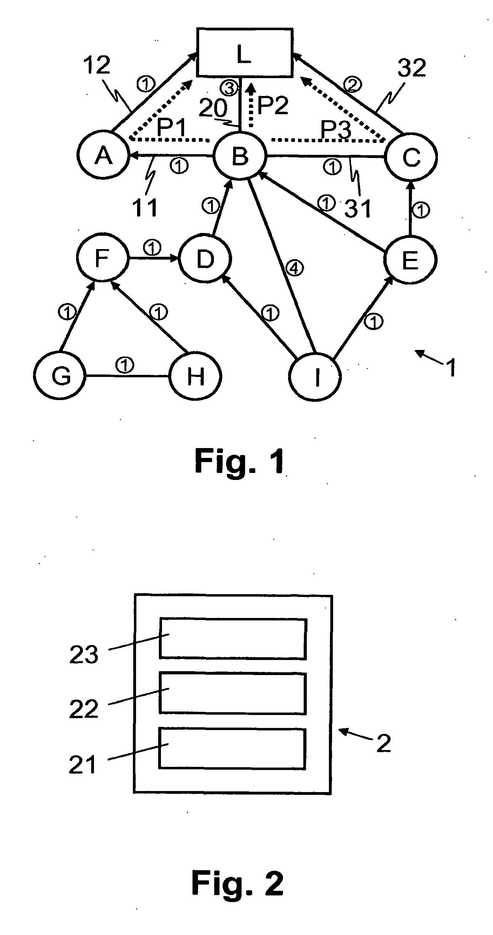

In Figure 1, reference numeral 1 refers to a packet-oriented (packet switched network) communication network, particularly a mesh network comprising a plurality of nodes A, B, C, D, E, F, G, H, I, L interconnected by links. Specifically, the communication network 1 comprises lossy links, e.g. wireless links or power line (PLC) links. In Figure 1, the circled numbers indicate for a link in each case an example of a mean transmission delay in some defined time unit, e.g. 1 second. Data packets are routed from a source node to a destination node via one of a number of possible paths. For example, in Figure 1, a data packet from node B to destination node L may be routed along path P1, leading through links 11 and 12 via node A; or through path P2, having a direct link 20 to destination node L; or along path P3, leading through links 31 and 32 via node C.

In Figure 2, reference numeral 2 refers to a routing device which comprises one or more operable computers with one or more processors. The routing device 2 includes various functional modules, including a measurement system 21, a routing module 22, and a configuration module 23. Preferably, the functional modules are implemented by way of programmed software modules comprising computer program code for controlling the processor(s) of the routing device 2. The program code is stored on a computer program product, particularly on a computer readable storage medium which is connected fixed or removable with the processor(s) of the routing device 2. One skilled in the art will understand, however, that, in alternative embodiments, the functional modules can be implemented fully or partly by way of hardware components.

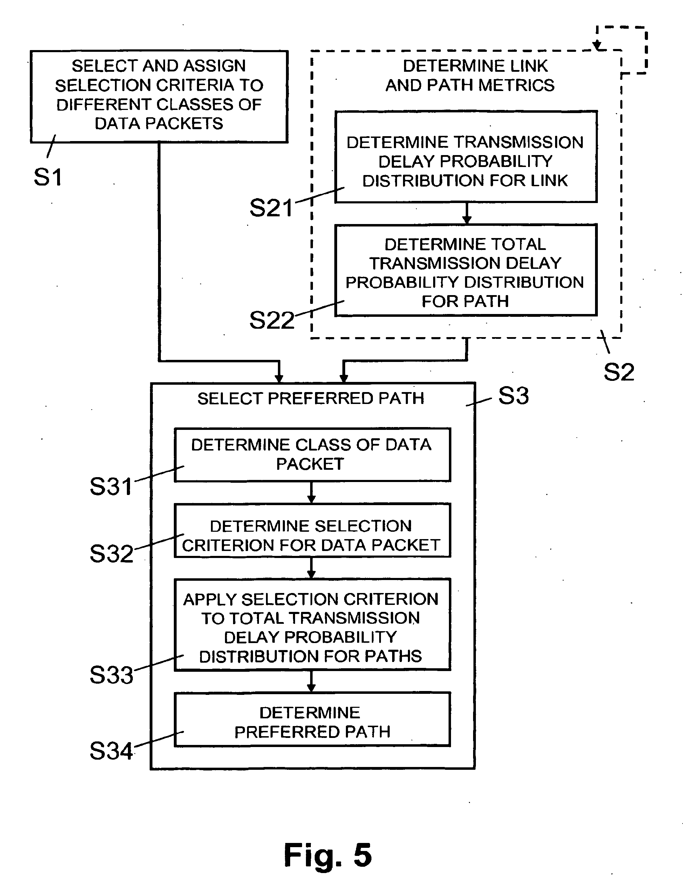

In the following paragraphs, described with reference to Figure 5 are possible sequences of steps performed by the functional modules for routing data packets in the communication network 1; specifically, for selecting a preferred (optimal) path from different possible paths P1, P2, P3 from a source node B to a destination node L.

In Figure 5, reference numeral S1 refers to a configuration step for selecting and assigning different selection criteria to different classes or types of data packets. Specifically, in step S1, the configuration module 23 defines different qualities of service (QoS) for different types of data by storing, e.g. in a quality of service table, different selection criteria assigned to different classes or types of data.

Reference numeral S2 refers to a block of steps for determining link and path metrics for the paths P1, P2, P3 and associated links 11, 12, 20, 31, 32 of the communication network 1. As indicated schematically in Figure 5, the measurement system 22 performs continuously the block of steps S2 for determining and updating dynamically the link and path metrics.

In step S21, the measurement system 21 determines the link metrics by determining the probability distributions for the transmission delays on the individual links 11, 12, 20, 31, 32 of the various paths P1, P2, P3 in the communication network 1. Specifically, the transmission delay probability distributions for the individual links 11, 12, 20, 31, 32 are defined by respective probability density functions.

As all with all dynamic link metrics, the new metric is continuously measured and updated, by measuring (acknowledgment-) delays of data packets sent, or using special probe packets sent to the neighbors of a link. In contrast to state-of-the-art metrics, the delay measurements are not averaged, but the full histogram *pdfᵢ* of the delay measurements is maintained and normalized as outlined above, together with the averaged packet loss count *pᵢ* (the integral of *pdfᵢ* over finite delays must equal *1-pᵢ).* As is well-known, updating and use of such dynamic link metric information must be sufficiently smoothed in time in order to avoid routing oscillations and instabilities. The measured histogram is typically a list of probabilities (fractions) as a function of rounded (quantized) delay values, rather than a continuous probability density function *pdfᵢ.* Such a discretized representation must be properly dealt with in the calculation of the convolution.

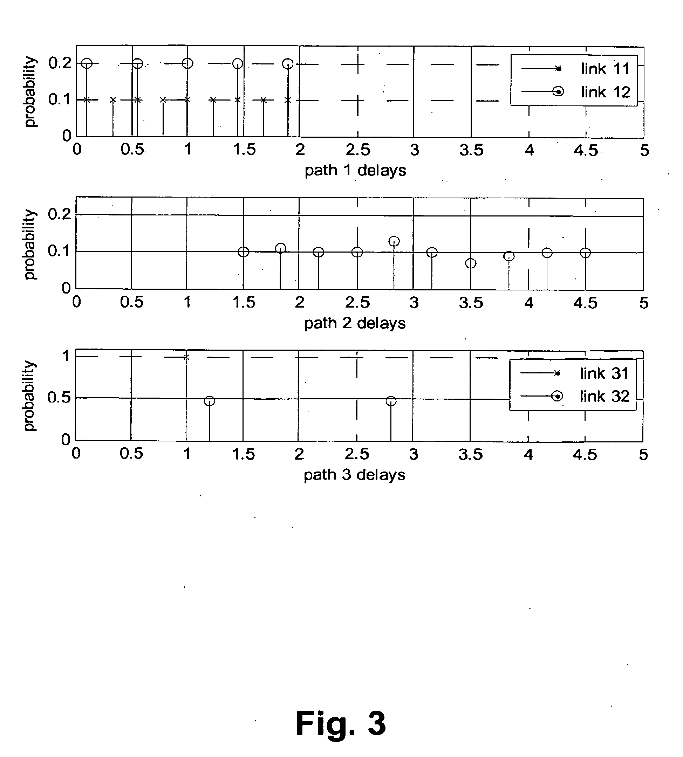

For the example of Figure 1, the first subplot (top) of Figure 3 shows the delay distributions of links 11 and 12 of path P1, whereby the mean delays, given that .the packet is not lost, are 1 unit (shown in Figure 1), and link 11 has a packet loss probability of *p₁₁* = *0.1*. The delay distribution (histogram) of the direct link 20 of path P2 is shown in the second subplot (middle) of Figure 3; the mean delay is 3 units. As to path P3, link 31 has a fixed delay of 1, while link 32 has a uniform delay distribution, represented only by the lower and upper limit in the third subplot (bottom) of Figure 3, and packet loss probability *p₃₂* = *0.05*.

Where the exact probability density function *pdfᵢ* is considered unnecessarily detailed, some coarser representation, e.g. by piecewise linear approximation, can be applied in order to reduce storage and computation complexity. In other embodiments, the delay measurements may be adjusted for packet lengths, similar to the ETT mentioned metric above.

In step S22, the measurement system 21 determines the path metrics from the link metrics by computing the total transmission delay probability distributions for the various paths P1, P2, P3 from the transmission delay probability distributions of their respective links 11, 12, 20, 31, 32. Specifically, the total transmission delay probability distribution is determined through convolution of the probability density functions of the links 11, 12, 20, 31, 32 between the adjacent nodes A/B, A/L, B/L, B/C, C/L of the respective path P1, P2, P3.

Aggregation of the link metric by convolution ('⊗') of the probability density functions *pdfᵢ* is performed under the realistic assumption of independent links whose delays are additive. Convolution is required for the general case of probability distributions. Specifically, quantiles of sums of random variables are not additive, except if the random variables are "co-monotone"(derived monotonely from a common underlying random variable). Hence, the quantile *d*_{α} for the total path cannot be calculated as the sum of quantiles *d_{αi}* of the individual links, but must be computed via convolutions of all *pdfᵢ* of the path. Below, shown is the pseudo-code for the aggregation of the pdfᵢ's of the (*nₕₒₒₛ*) links into the path *pdfₚₐₜₕ*, including the calculations of the loss probability *pₚₐₜₕ* of a path from *pᵢ (= 1 - Dᵢ) to pₚₐₜₕ:*
pdfₚₐₜₕ = delta
pₚₐₜₕ = 0
for i = 1 to nₕₒₚₛ
   pdfₚₐₜₕ, = pdfₚₐₜₕ ⊗ pdfᵢ
   pₚₐₜₕ = pₚₐₜₕ + pᵢ - pₚₐₜₕ·pᵢ
end

It is apparent that this link/path metric is more complex, as it requires maintaining an array holding *pdfᵢ* and *pᵢ* (rather than a single scalar in the state-of-the-art metrics), and more complex processing (convolution, instead of simple additions or multiplications of scalars). However, this complexity is well within the capability of modern embedded processors. Storing and processing of link metrics is typically only a small part of the overall routing software, so that the additional complexity is acceptable given the advantages of the proposed new link metric.

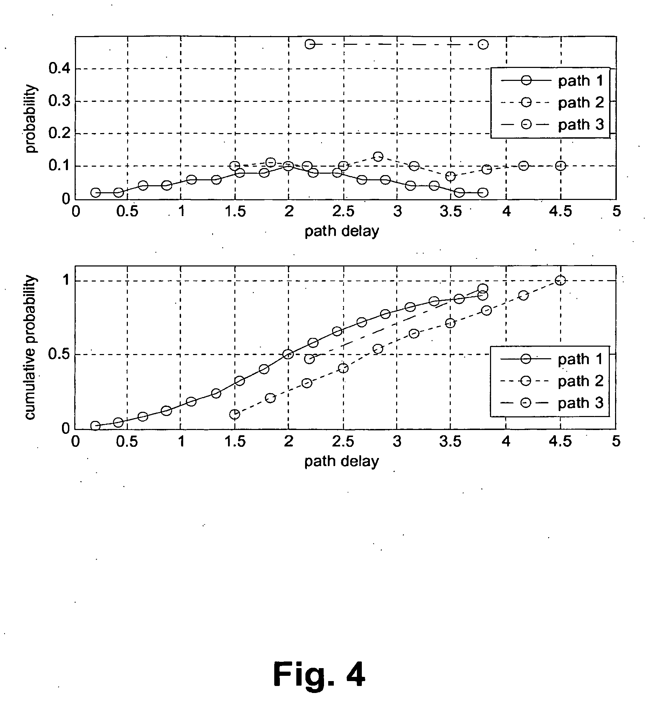

The results of the convolution for each of the three paths P1, P2, P3 of Figure 1 are shown in the upper part of Figure 4 (note that the delay distribution of path P1 deviates from the triangle (= convolution of the uniform delay distributions of links 11 and 12), due to the different quantization of the delay values for links 11 and 12, shown in the first (top) subplot of Figure 3).

Finally, the lower part of Figure 4 shows the cumulative probability distributions for the three paths P1, P2, P3, obtained by accumulating the delay probabilities in the upper part of Figure 4. A possible gap between the right endpoint of the cumulative distribution and 1 equals the packet loss probability *pₚₐₜₕ* of the path.

In step S3, the routing module 22 selects, from the possible paths P1, P2, P3 leading from the source node B to the destination node L, the preferred path based on the current path metrics and according to a selection criterion relevant for the data packet to be transmitted.

In step S31, the routing module 22 determines the class or type of the data packet to be transmitted.

In step S32, the routing module 22 determines for the class or type of the data packet, e.g. from the quality of service table, the selection criterion to be applied for selecting the preferred path.

For example, the various routing criteria, which can be derived from the cumulative probability distributions, include:
- given a maximum path delay, select the path with highest probability of satisfying this upper limit,
- given a probability α close to 1, select the path with lowest quantile *d*_{α}, and
- select path with highest packet delivery ratio *D* (= 1 - *ppₐₜₕ*).

In step S33, the routing module 22 applies the selection criterion to the path metrics of the possible paths P1, P2, P3 from the source node B to the destination node L. Specifically, the routing module 22 applies the selection criterion to the total transmission delay probability distributions of the possible paths P1, P2, P3.

In step S34, the routing module 22 determines the preferred (optimal) path based on the results of step S33.

Thus, depending on the criteria and their parameters, corresponding to different QoS requirements for packets of the same source / destination pair, different paths may be selected, all based on the same new link metric incorporating the link delay distribution.

It should be noted that, in the description, the computer program code has been associated with specific functional modules and the sequence of the steps has been presented in a specific order, one skilled in the art will understand, however, that the computer program code may be structured differently and that the order of at least some of the steps could be altered, without deviating from the scope of the invention.

## Claims

1. A routing method for a packet-oriented communication network (1), the method comprising:
determining (S21) a probability density function indicative of a transmission delay probability distribution for any link (11, 12, 20, 31, 32) between adjacent nodes (A, B, C, L) of a path (P1, P2, P3) from a source node (B) to a destination node (L);
determining (S22) for different possible paths (P1, P2, P3) from the source node (B) to the destination node (L) in each case a total transmission delay probability distribution through convolution of the probability density functions of the links (11, 12, 20, 31, 32) between the adjacent nodes (A, B, C, L) of the respective path (P1, P2, P3);
selecting (S32) a first selection criterion for a first class of packets;
**characterised by**
selecting (S32) a second selection criterion for a second class of packets; and selecting the preferred path (P1, P2, P3) for the first class of packets and the second class of packets by applying to the total transmission delay probability distributions determined for the different possible paths (P1, P2, P3) the first selection criterion or the second selection criterion, respectively, wherein the first and the second selection criteria are different and selected from a group of criteria including
- selecting the path with a lowest quantile d_{α}, wherein a quantile *d*_{α} is defined such that *Pr*[*delay* ≤ *d*ₐ], where α is a large number close to 1,
- selecting the path with a highest probability of satisfying a maximum path delay,
- selecting the path with a highest packet delivery ratio.

2. The routing method of claim 1, wherein selecting (S3) the preferred path (P1, P2, P3) includes determining from the total transmission delay probability distributions for the different possible paths (P1, P2, P3) in each case a quantile *d_{α}*, such that the probability of the total transmission delay of a path being smaller or equal to the quantile *d*ₐ is equal to a given probability level *α,* Pr[*delay* ≤ *dₐ*] = α*,* and selecting the preferred path (P1, P2, P3) with the lowest quantile *d*ₐ.

3. The routing method of claim 1, wherein selecting (S3) the preferred path (P1, P2, P3) includes determining from the total transmission delay probability distributions for the different possible paths (P1, P2, P3) in each case a probability of not exceeding a given maximum transmission delay, and selecting the preferred path (P1, P2, P3) with the highest probability of not exceeding the maximum transmission delay.

4. The routing method of claim 1, wherein selecting (S3) the preferred path (P1, P2, P3) includes determining from the total transmission delay probability distributions for the different possible paths (P1, P2, P3) in each case a packet delivery ratio or a mean delay, and selecting the preferred path (P1, P2, P3) with the highest packet delivery ratio or with the smallest mean delay, respectively.

5. The routing method of one of claims 1 to 4, wherein the first class of packets includes metering data and the second class of packets includes status or cyclic sampled data, the data emanating from a medium or low voltage power distribution network.

6. A routing device (2) for a packet-oriented communication network (1), the device (2) comprising:
a measurement system (21) configured to determine a probability density function indicative of a transmission delay probability distribution for any link (11, 12, 20, 31, 32) between adjacent nodes (A, B, C, L) of a path (P1, P2, P3) from a source node (B) to a destination node (L); and configured to determine for different possible paths (P1, P2, P3) from the source node (B) to the destination node (L) in each case a total transmission delay probability distribution through convolution of the probability density functions of the links (11, 12, 20, 31, 32) between the adjacent nodes (A, B, C, L) of the respective path (P1, P2, P3);
a configuration module (23) configured to select a first selection criterion for a first class of packets; **characterised in that** the configuration module is further configured to select a second selection criterion for a second class of packets, wherein the first selection criterion and the second selection criterion are different and selected from a group of criteria including
- selecting the path with a lowest quantile d_{α}, wherein a quantile *d*_{α} is defined such that *Pr*[*delay* ≤ *d*_{α}], where α is a large number close to 1,
- selecting the path with a highest probability of satisfying a maximum path delay,
- selecting the path with a highest packet delivery ratio; and
a routing module (22) configured to select the preferred path (P1, P2, P3) for the first class of packets and the second class of packets by applying to the total transmission delay probability distributions determined for the different possible paths (P1, P2, P3) the first selection criterion or the second selection criterion, respectively.

7. The routing device (2) of claim 6, wherein the routing module (22) is further configured to determine from the total transmission delay probability distributions for the different possible paths (P1, P2, P3) in each case a quantile *d_{α},* such that the probability of the total transmission delay of a path (P1, P2, P3) being smaller or equal to the quantile *d_{α}* is equal to a given probability level α, Pr[*delay* ≤ *d*_{α}]=α, and to select the preferred path (P1, P2, P3) with the lowest quantile *d*_{α}.

8. The routing method of claim 6, wherein the routing module (22) is further configured to determine from the total transmission delay probability distributions for the different possible paths (P1, P2, P3) in each case a probability of not exceeding a given maximum transmission delay, and to select the preferred path (P1, P2, P3) with the highest probability of not exceeding the maximum transmission dely.

9. The routing device (2) of claim 6, wherein the routing module (22) is further configured to determine from the total transmission delay probability distributions for the different possible paths (P1, P2, P3) in each case a packet delivery ratio or a mean delay, and to select the preferred path (P1, P2, P3) with the highest packet delivery ratio or with the smallest mean delay, respectively.

10. A computer program product comprising a computer-readable medium having stored thereon computer program code for controlling one or more processors of a routing device (2) for a packet-oriented communication network (1) such that the routing device (2) performs the routing method of one of the claims 1 to 5.

## Patentansprüche

1. Routingverfahren für ein paketorientiertes Kommunikationsnetz (1), mit den folgenden Schritten:
Bestimmen (S21) einer Wahrscheinlichkeitsdichtefunktion, die eine Übertragungsverzögerungs-Wahrscheinlichkeitsverteilung für eine beliebige Strecke (11, 12, 20, 31, 32) zwischen angrenzenden Knoten (A, B, C, L) eines Pfads (P1, P2, P3) von einem Quellenknoten (B) zu einem Zielknoten (L) angibt;
Bestimmen (S22) jeweils einer Gesamtübertragungsverzögerungs-Wahrscheinlichkeitsverteilung für verschiedene mögliche Pfade (P1, P2, P3) von dem Quellenknoten (B) zum Zielknoten (L) durch Faltung der Wahrscheinlichkeitsdichtefunktionen der Strecken (11, 12, 20, 31, 32) zwischen den angrenzenden Knoten (A, B, C, L) des jeweiligen Pfads (P1, P2, P3);
Auswählen (S32) eines ersten Auswahlkriteriums für eine erste Klasse von Paketen;
gekennzeichnet durch
Auswählen (S32) eines zweiten Auswahlkriteriums für eine zweite Klasse von Paketen; und Auswählen des bevorzugten Pfads (P1, P2, P3) für die erste Klasse von Paketen und die zweite Klasse von Paketen durch Anwenden des ersten Auswahlkriteriums bzw. des zweiten Auswahlkriteriums auf die für die verschiedenen möglichen Pfade (P1, P2, P3) bestimmten Gesamtübertragungsverzögerungs-Wahrscheinlichkeitsverteilungen, wobei das erste und das zweite Auswahlkriterium verschieden sind und aus einer folgenden Gruppe von Kriterien ausgewählt sind:
- Auswählen des Pfads mit einem niedrigsten Quantil d_{α}, wobei ein Quantil *d*_{α} so definiert ist, dass *Pr*[Verzögerung ≤ *d*_{α}] ist, wobei α eine große Zahl nahe bei 1 ist,
- Auswählen des Pfads mit einer höchsten Wahrscheinlichkeit, eine Maximalpfadverzögerung zu erfüllen,
- Auswählen des Pfads mit einem höchsten Paketablieferungsverhältnis.

2. Routingverfahren nach Anspruch 1, wobei das Auswählen (S3) des bevorzugten Pfads (P1, P2, P3) Bestimmen jeweils eines Quantils *d*_{α}, aus den Gesamtübertragungsverzögerungs-Wahrscheinlichkeitsverteilungen für die verschiedenen möglichen Pfade (P1, P2, P3), dergestalt, dass die Wahrscheinlichkeit, dass die Gesamtübertragungsverzögerung eines Pfads kleiner oder gleich dem Quantil *d*_{α} ist, gleich einem gegebenen Wahrscheinlichkeitswert α ist, Pr[*Verzögerung* ≤ *d_{α}*] = α und Auswählen des bevorzugten Pfads (P1, P2, P3) mit dem niedrigsten Quantil *d*α umfasst.

3. Routingverfahren nach Anspruch 1, wobei das Auswählen (S3) des bevorzugten Pfads (P1, P2, P3) jeweils Bestimmen einer Wahrscheinlichkeit, eine gegebene maximale Übertragungsverzögerung nicht zu überschreiten, aus den Gesamtübertragungsverzögerungs-Wahrscheinlichkeitsverteilungen für die verschiedenen möglichen Pfade (P1, P2, P3) und Auswählen des bevorzugten Pfads (P1, P2, P3) mit der höchsten Wahrscheinlichkeit, die maximale Übertragungsverzögerung nicht zu übersteigen, umfasst.

4. Routingverfahren nach Anspruch 1, wobei das Auswählen (S3) des bevorzugten Pfads (P1, P2, P3) jeweils Bestimmen eines Paketablieferungsverhältnisses oder einer mittleren Verzögerung aus den Gesamtübertragungsverzögerungs-Wahrscheinlichkeitsverteilungen für die verschiedenen möglichen Pfade (P1, P2, P3) und Auswählen des bevorzugten Pfads (P1, P2, P3) mit dem höchsten Paketablieferungsverhältnis bzw. mit der kleinsten mittleren Verzögerung umfasst.

5. Routingverfahren nach einem der Ansprüche 1 bis 4, wobei die erste Klasse von Paketen Zählerdaten umfasst und die zweite Klasse von Paketen Status- oder zyklisch abgetastete Daten umfasst, wobei die Daten aus einem Mittel- oder Niederspannungsstromnetz hervorgehen.

6. Routingvorrichtung (2) für ein paketorientiertes Kommunikationsnetz (1), wobei die Vorrichtung (2) Folgendes umfasst:
ein Messsystem (21), ausgelegt zum Bestimmen einer Wahrscheinlichkeitsdichtefunktion, die eine Übertragungsverzögerungs-Wahrscheinlichkeitsverteilung für eine beliebige Strecke (11, 12, 20, 31, 32) zwischen angrenzenden Knoten (A, B, C, L) eines Pfads (P1, P2, P3) von einem Quellenknoten (B) zu einem Zielknoten (L) angibt; und ausgelegt ist zum Bestimmen jeweils einer Gesamtübertragungsverzögerungs-Wahrscheinlichkeitsverteilung für verschiedene mögliche Pfade (P1, P2, P3) von dem Quellenknoten (B) zum Zielknoten (L) durch Faltung der Wahrscheinlichkeitsdichtefunktionen der Strecken (11, 12, 20, 31, 32) zwischen den angrenzenden Knoten (A, B, C, L) des jeweiligen Pfads (P1, P2, P3);
ein Konfigurationsmodul (23), ausgelegt zum Auswählen eines ersten Auswahlkriteriums für eine erste Klasse von Paketen; **dadurch gekennzeichnet, dass** das Konfigurationsmodul ferner ausgelegt ist zum Auswählen eines zweiten Auswahlkriteriums für eine zweite Klasse von Paketen, wobei das erste Auswahlkriterium und das zweite Auswahlkriterium verschieden sind und aus einer folgenden Gruppe von Kriterien ausgewählt werden:
- Auswählen des Pfads mit einem niedrigsten Quantil d_{α}, wobei ein Quantil *d*_{α} so definiert ist, dass *Pr*[Verzögerung ≤ *d*_{α}] ist, wobei α eine große Zahl nahe bei 1 ist,
- Auswählen des Pfads mit einer höchsten Wahrscheinlichkeit, eine Maximalpfadverzögerung zu erfüllen,
- Auswählen des Pfads mit einem höchsten Paketablieferungsverhältnis; und
ein Routingmodul (22), ausgelegt zum Auswählen des bevorzugten Pfads (P1, P2, P3) für die erste Klasse von Paketen und die zweite Klasse von Paketen durch Anwenden des ersten Auswahlkriteriums bzw. des zweiten Auswahlkriteriums auf die für die verschiedenen möglichen Pfade (P1, P2, P3) bestimmten Gesamtübertragungsverzögerungs-Wahrscheinlichkeitsverteilungen.

7. Routingvorrichtung (2) nach Anspruch 6, wobei das Routingmodul (22) ferner ausgelegt ist zum Bestimmen jeweils eines Quantils *d*_{α} aus den Gesamtübertragungsverzögerungs-Wahrscheinlichkeitsverteilungen für die verschiedenen möglichen Pfade (P1, P2, P3), dergestalt, dass die Wahrscheinlichkeit, dass die Gesamtübertragungsverzögerung eines Pfads (P1, P2, P3) kleiner oder gleich dem Quantil *d*_{α}, ist, gleich einem gegebenen Wahrscheinlichkeitswert α ist, Pr[*Verzögerung* ≤ *d*_{α}] = α und Auswählen des bevorzugten Pfads (P1, P2, P3) mit dem niedrigsten Quantil *d*_{α}.

8. Routingverfahren nach Anspruch 6, wobei das Routingmodul (22) ferner ausgelegt ist zum Bestimmen jeweils einer Wahrscheinlichkeit, eine gegebene maximale Übertragungsverzögerung nicht zu überschreiten, aus den Gesamtübertragungsverzögerungs-Wahrscheinlichkeitsverteilungen für die verschiedenen möglichen Pfade (P1, P2, P3) und Auswählen des bevorzugten Pfads (P1, P2, P3) mit der höchsten Wahrscheinlichkeit, die maximale Übertragungsverzögerung nicht zu übersteigen.

9. Routingvorrichtung (2) nach Anspruch 6, wobei das Routingmodul (22) ferner ausgelegt ist zum Bestimmen jeweils eines Paketablieferungsverhältnisses oder einer mittleren Verzögerung aus den Gesamtübertragungsverzögerungs-Wahrscheinlichkeitsverteilungen für die verschiedenen möglichen Pfade (P1, P2, P3) und Auswählen des bevorzugten Pfads (P1, P2, P3) mit dem höchsten Paketablieferungsverhältnis bzw. mit der kleinsten mittleren Verzögerung.

10. Computerprogrammprodukt, das ein computerlesbares Medium umfasst, worauf Computerprogrammcode gespeichert ist, um einen oder mehrere Prozessoren einer Routingvorrichtung (2) für ein paketorientiertes Kommunikationsnetz (1) so zu steuern, dass die Routingvorrichtung (2) das Routingverfahren nach einem der Ansprüche 1 bis 5 ausführt.

## Revendications

1. Procédé de routage pour réseau de communication orienté paquets (1), le procédé comprenant :
la détermination (S21) d'une fonction de densité de probabilité indicative d'une distribution de probabilité de retard de transmission pour n'importe quelle liaison (11, 12, 20, 31, 32) entre des noeuds adjacents (A, B, C, L) d'un chemin (P1, P2, P3) depuis un noeud source (B) jusqu'à un noeud destination (L) ;
la détermination (S22) pour différents chemins possibles (P1, P2, P3) depuis le noeud source (B) jusqu'au noeud destination (L) dans chaque cas d'une distribution de probabilité de retard de transmission total par convolution des fonctions de densité de probabilité des liaisons (11, 12, 20, 31, 32) entre les noeuds adjacents (A, B, C, L) du chemin respectif (P1, P2, P3) ;
la sélection (S32) d'un premier critère de sélection pour une première classe de paquets ;
**caractérisé par**
la sélection (S32) d'un second critère de sélection pour une seconde classe de paquets ; et
la sélection du chemin préféré (P1, P2, P3) pour la première classe de paquets et la seconde classe de paquets en appliquant aux distributions de probabilité de retard de transmission total déterminées pour les différents chemins possibles (P1, P2, P3) le premier critère de sélection ou le second critère de sélection, respectivement, dans lequel les premier et second critères de sélection sont différents et sélectionnés dans un groupe de critères comportant
- la sélection du chemin ayant le quantile le plus bas d_{α}, le quantile d_{α} étant défini de telle sorte que *Pr[retard ≤ d*_{α}*],* où α est un grand nombre proche de 1,
- la sélection du chemin ayant la plus grande probabilité de satisfaire un retard de chemin maximum,
- la sélection du chemin ayant le plus haut rapport de délivrance de paquets.

2. Procédé de routage selon la revendication 1, dans lequel la sélection (S3) du chemin préféré (P1, P2, P3) comporte la détermination à partir des distributions de probabilité de retard de transmission total des différents chemins possibles (P1, P2, P3) dans chaque cas d'un quantile d_{α}, de telle sorte que la probabilité du retard de transmission total d'un chemin soit inférieure ou égale au quantile d_{α} soit égale à un niveau de probabilité donné α, *Pr[retard* ≤ *d_{α}]* = α, et la sélection du chemin préféré (P1, P2, P3) ayant le quantile le plus bas d_{α}.

3. Procédé de routage selon la revendication 1, dans lequel la sélection (S3) du chemin préféré (P1, P2, P3) comporte la détermination à partir des distributions de probabilité de retard de transmission total des différents chemins possibles (P1, P2, P3) dans chaque cas d'une probabilité de ne pas dépasser un retard de transmission maximum donné, et la sélection du chemin préféré (P1, P2, P3) ayant la plus haute probabilité de ne pas dépasser le retard de transmission maximum.

4. Procédé de routage selon la revendication 1, dans lequel la sélection (S3) du chemin préféré (P1, P2, P3) comporte la détermination à partir des distributions de probabilité de retard de transmission total des différents chemins possibles (P1, P2, P3) dans chaque cas d'un rapport de délivrance de paquets ou d'un retard moyen, et la sélection du chemin préféré (P1, P2, P3) ayant le plus haut rapport de délivrance de paquets ou le plus petit retard moyen, respectivement.

5. Procédé de routage selon l'une quelconque des revendications 1 à 4, dans lequel la première classe de paquets comporte des données de mesure et la seconde classe de paquets comporte des données d'état ou échantillonnées cycliques, les données émanant d'un réseau de distribution de puissance de moyenne ou faible tension.

6. Dispositif de routage (2) pour un réseau de communication orienté paquets (1), le dispositif (2) comprenant :
un système de mesure (21) configuré pour déterminer une fonction de densité de probabilité indicative d'une distribution de probabilité de retard de transmission pour n'importe quelle liaison (11, 12, 20, 31, 32) entre des noeuds adjacents (A, B, C, L) d'un chemin (P1, P2, P3) depuis un noeud source (B) jusqu'à un noeud destination (L) ; et configuré pour déterminer pour différents chemins possibles (P1, P2, P3) depuis le noeud source (B) jusqu'au noeud destinataire (L) dans chaque cas d'une distribution de probabilité de retard de transmission total par convolution des fonctions de densité de probabilité des liaisons (11, 12, 20, 31, 32) entre les noeuds adjacents (A, B, C, L) du chemin respectif (P1, P2, P3) ;
un module de configuration (23) configuré pour sélectionner un premier critère de sélection pour une première classe de paquets ; **caractérisé en ce que** le module de configuration est configuré en outre pour sélectionner un second critère de sélection pour une seconde classe de paquets, le premier critère de sélection et le second critère de sélection étant différents et sélectionnés dans un groupe de critères comportant
- la sélection du chemin ayant le quantile le plus bas d_{α}, le quantile d_{α} étant défini de telle sorte que *Pr[retard ≤ d*_{α}*],* où α est un grand nombre proche de 1,
- la sélection du chemin ayant la plus grande probabilité de satisfaire un retard de chemin maximum,
- la sélection du chemin ayant le plus haut rapport de délivrance de paquets ; et
un module de routage (22) configuré pour sélectionner le chemin préféré (P1, P2, P3) pour la première classe de paquets et la seconde classe de paquets en appliquant aux distributions de probabilité de retard de transmission total déterminées pour les différents chemins possibles (P1, P2, P3) le premier critère de sélection ou le second critère de sélection, respectivement.

7. Procédé de routage (2) selon la revendication 6, dans lequel le module de routage (22) est configuré en outre pour déterminer à partir des distributions de probabilité de retard de transmission total des différents chemins possibles (P1, P2, P3) dans chaque cas un quantile d_{α}, de telle sorte que la probabilité du retard de transmission total d'un chemin (P1, P2, P3) inférieure ou égale au quantile d_{α} soit égale à un niveau de probabilité donné α, *Pr[retard* ≤ *d*_{α}] = α, et sélectionner le chemin préféré (P1, P2, P3) ayant le quantile le plus bas *d*_{α}.

8. Procédé de routage selon la revendication 6, dans lequel le module de routage (22) est configuré en outre pour déterminer à partir des distributions de probabilité de retard de transmission total des différents chemins possibles (P1, P2, P3) dans chaque cas une probabilité de ne pas dépasser un retard de transmission maximum donné, et sélectionner le chemin préféré (P1, P2, P3) ayant la plus haute probabilité de ne pas dépasser le retard de transmission maximum.

9. Dispositif de routage (2) selon la revendication 6, dans lequel le module de routage (22) est configuré en outre pour déterminer à partir des distributions de probabilité de retard de transmission total des différents chemins possibles (P1, P2, P3) dans chaque cas un rapport de délivrance de paquets ou un retard moyen, et sélectionner le chemin préféré (P1, P2, P3) ayant le plus haut rapport de délivrance de paquets ou le plus petit retard moyen, respectivement.

10. Produit de programme informatique comprenant un support lisible par ordinateur dans lequel est mémorisé un code de programme informatique pour commander un ou plusieurs processeurs d'un dispositif de routage (2) d'un réseau de communication orienté paquets (1) de telle sorte que le dispositif de routage (2) exécute le procédé de routage selon l'une des revendications 1 à 5.
